# FASCICULE DE BREVET EUROPEEN

(11) **EP 3 311 070 B1**
(45) Date de publication et mention de la délivrance du brevet: **01.12.2021**
(21) Numéro de dépôt: 16734433.2
(22) Date de dépôt: 09.06.2016
(51) Int. Cl.: F22B 1/04, F22B 27/14, B64G 1/40, F02K 9/44

(54) **SYSTÈME D'ALIMENTATION EN ERGOL D'UN ALLUMEUR**
SYSTEM ZUR VERSORGUNG EINES ZÜNDERS MIT TREIBMITTEL
SYSTEM FOR SUPPLYING AN IGNITER WITH PROPELLANT

(30) Priorité: 18.06.2015 FR 1501275
(43) Date de publication de la demande: 25.04.2018
(73) Titulaire: ArianeGroup SAS, 78130 Les Mureaux (FR)
(72) Inventeur: DURI, Davide, 27510 Pressagny l'Orgueuilleux (FR)
(74) Mandataire: Cabinet Beau de Loménie
(86) Numéro de dépôt international: PCT/FR2016/051380
(87) Numéro de publication internationale: WO 2016/203138

(56) Documents cités:
- EP-A1- 1 591 719
- EP-A2- 1 351 016
- FR-A- 328 147
- US-A- 5 014 507

## Description

### DOMAINE TECHNIQUE GENERAL

La présente invention concerne le domaine des systèmes d'alimentation de moteurs cryotechniques, et plus précisément l'alimentation en ergol gazeux d'un système d'allumage d'un tel moteur cryotechnique.

### ETAT DE L'ART

Document EP1591719 A1 divulgue un dispositif de production de vapeur surchauffée utilisant des éléments métalliques tels que des sphères.

Les systèmes d'allumage de moteurs cryotechniques doivent être alimentés en ergols gazeux pour leur fonctionnement, le débit d'ergol gazeux devant être maîtrisé afin d'assurer l'allumage.

L'ergol liquide utilisé pour l'alimentation du système d'allumage est typiquement prélevé du réservoir de l'étage propulsif du moteur associé pendant la durée de la séquence d'allumage.

Ce prélèvement est réalisé à la pression du réservoir, et l'ergol est ensuite vaporisé afin d'alimenter le système d'allumage.

Or, cette vaporisation de l'ergol est complexe à réaliser, et peut avoir un impact négatif sur les performances du système notamment en raison de l'inertie thermique du circuit d'alimentation qui peut empêcher la vaporisation complète de l'ergol.

Plusieurs solutions sont actuellement proposées afin d'améliorer les performances à l'allumage :
- Des solutions dites « passives », dans lesquels l'ergol est stocké sous haute pression dans un ensemble de bouteilles, lesdites bouteilles étant associées à un circuit de remplissage, contrôle et détente, ou encore dans lesquels l'ergol est vaporisé par échange convectif avec les parois du circuit d'alimentation de l'allumeur.
- Des solutions dites « actives », dans lesquelles l'ergol est vaporisé via un chauffage réalisé par des sources de chaleur autogènes alimentées par l'ergol des réservoirs.

Ces différentes solutions présentent cependant chacune des inconvénients qui s'avèrent très pénalisants.

Les systèmes passifs utilisant des bouteilles pour le stockage haute pression des ergols présentent des inconvénients en termes de masse. Par ailleurs, les systèmes passifs fonctionnant par échange thermique sont très complexes à dimensionner notamment du fait du faible coefficient d'échange en convection forcée et écoulement en film.

Les systèmes actifs réalisant un réchauffement de l'ergol nécessitent des échangeurs thermiques et une chambre de combustion associée, qui sont eux aussi pénalisants en termes de masse. De plus, pour les systèmes actifs, non seulement un allumeur indépendant est nécessaire, ce qui pose à nouveau les mêmes problématiques, mais la combustion des phases transitoires est de plus très difficile à maîtriser.

### PRESENTATION DE L'INVENTION

La présente invention vise à répondre au moins en partie à ces problématiques, et propose ainsi un système d'alimentation en ergol d'un allumeur selon la revendication 1.

Le volume interne est typiquement défini par des parois périphériques du réservoir, une plaque amont et une plaque aval, l'une des plaques amont et aval étant soumise à un effort de poussée vers l'autre des plaques amont et aval de manière à compacter les sphères de stockage contenues dans le volume interne.

Lesdites sphères de stockage sont par exemple réalisées en polyamides et/ou en Polytétrafluoroéthylène.

Le système peut en outre comprendre un système d'injection de gaz chaud dans le réservoir, de manière à emmagasiner de l'énergie calorifique dans les sphères de stockage.

Ledit gaz chaud est par exemple de l'Helium.

L'invention concerne également un procédé de vaporisation d'un ergol alimentant un allumeur selon la revendication 6.

Lesdites sphères de stockage sont typiquement maintenues compressées dans le volume interne du réservoir, entre deux plaques disposées dans le réservoir et soumises à un effort de poussée. Les deux plaques sont percées, et présentent ainsi chacune des trous permettant le passage du fluide au sein du réservoir, tout en assurant le maintien des sphères de stockage dans le volume interne.

Les trous aménagés dans les plaques ont ainsi un diamètre inférieur à celui des sphères de stockage.

Selon un mode de réalisation particulier, on emmagasine de la chaleur dans les sphères de stockage par injection d'un gaz chaud dans le réservoir, par exemple de l'Helium.

### PRESENTATION DES FIGURES

D'autres caractéristiques, buts et avantages de l'invention ressortiront de la description qui suit, qui est purement illustrative et non limitative, et qui doit être lue en regard des figures annexées, sur lesquelles :
- La figure 1 représente schématiquement un système selon un aspect de l'invention ;
- La figure 2 illustre schématiquement un procédé selon un aspect de l'invention.

### DESCRIPTION DETAILLEE

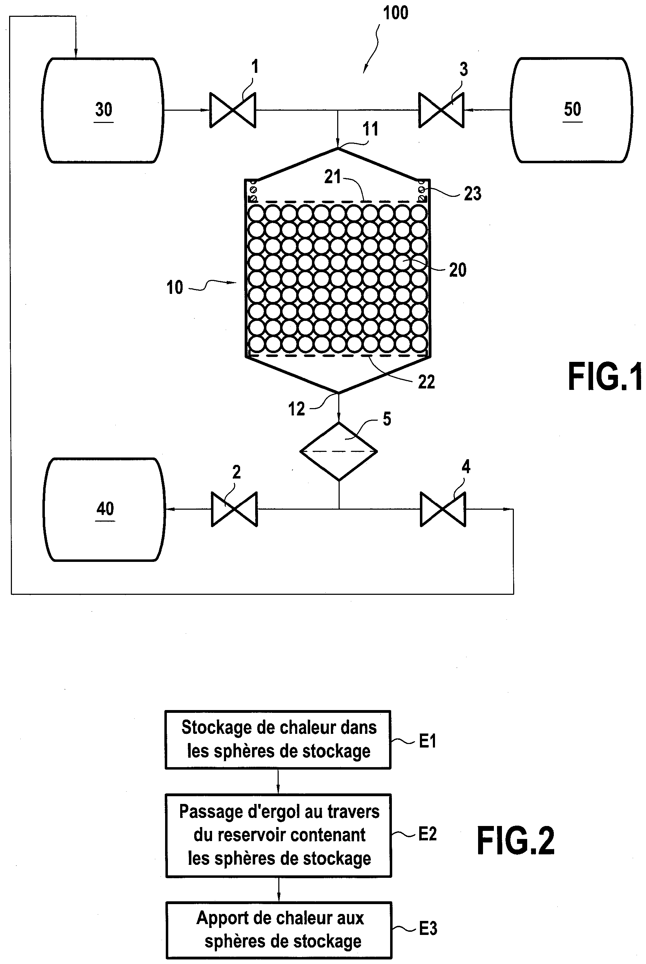

La figure 1 représente schématiquement un exemple de système 100 d'alimentation en ergol selon un aspect de l'invention.

Le système 100 tel qu'illustré comprend un réservoir 10 comprenant une admission 11 et un refoulement 12, et délimité par des parois.

Le refoulement 12 du réservoir 10 est typiquement muni d'un filtre 5.

L'admission 11 du réservoir 10 est reliée à un réservoir d'ergol liquide 30 par l'intermédiaire d'une vanne d'admission d'ergol 1.

Le refoulement 12 du réservoir 10 est relié à un allumeur 40 par l'intermédiaire d'une vanne d'allumage 2.

Le réservoir 10 définit un volume interne, dont une portion au moins est remplie de sphères de stockage 20.

Les sphères de stockage 20 sont par exemple réalisées en polyamides et/ou en Polytétrafluoroéthylène (PTFE). Le PTFE est particulièrement intéressant du fait de son rapport masse/capacité de transfert thermique, et du fait de sa compatibilité chimique avec les ergols communément utilisés et notamment avec l'oxygène.

Dans le mode de réalisation représenté, le volume interne rempli de sphères de stockage 20 est défini par les parois périphériques du réservoir d'une part, par une plaque amont 21 et par une plaque aval 22.

Dans l'exemple illustré, la plaque aval 22 est fixe, tandis que la plaque amont 21 est couplée à un ressort 23 qui exerce un effort de poussée sur la plaque amont 21 tendant à la déplacer vers la plaque aval 22.

En variante, c'est la plaque aval 22 qui peut être couplé à un ressort tendant à la pousser vers la plaque amont 21 tandis que cette dernière est fixe, ou bien les deux plaques amont 21 et aval 22 peuvent chacune être couplées à un ressort tendant à les pousser l'une vers l'autre.

Les deux plaques amont 21 et aval 22 sont percées, et présentent ainsi chacune des trous permettant le passage du fluide au sein du réservoir 10, tout en assurant le maintien des sphères de stockage 20 dans le volume interne du réservoir 10.

Les trous aménagés dans les plaques amont 21 et aval 22 ont ainsi un diamètre inférieur à celui des sphères de stockage 20.

Les sphères de stockage 20 sont ainsi compactées dans le volume interne, entre les deux plaques amont 21 et aval 22.

Le volume interne du réservoir 10 rempli de sphères de stockage 20 est configuré de manière à ce qu'un fluide allant de l'admission 11 vers le refoulement 12 du réservoir 10 passe nécessairement au travers du volume interne du réservoir 10.

Les sphères de stockage 20 sont configurées de manière à stocker de la chaleur, et ainsi à la transférer à un fluide qui traverse le volume interne du réservoir 10. Elles sont au préalable chauffées, de manière à stocker l'énergie désirée.

Ainsi, lors de l'ouverture de la vanne d'admission d'ergol 1 et de la vanne d'allumage 2, de l'ergol liquide en provenance du réservoir d'ergol liquide 30 parvient au réservoir 10 via son admission 11, puis traverse le volume interne du réservoir rempli de sphères de stockage 20, avant de ressortir par le refoulement 12 du réservoir et atteindre l'allumeur 40.

Lors du passage de l'ergol liquide du sein du volume interne du réservoir 10 rempli de sphères de stockage 20, ces dernières réalisent un transfert thermique vers l'ergol liquide, et transfèrent donc l'énergie calorifique emmagasinée des sphères de stockage 20 vers l'ergol.

Les sphères de stockage 20 sont calibrées de manière à ce que l'énergie calorifique qui y est stockée soit suffisante pour réaliser une vaporisation de l'ergol liquide lors de son passage par le réservoir 10, de sorte que l'allumeur 40 soit alimenté en ergol gazeux.

Le système 100 peut également comprendre un système d'injection de gaz chaud dans le réservoir 10, de manière à charger ou recharger les sphères de stockage 20 en énergie calorifique.

Dans le mode de réalisation illustré sur la figure 1, l'admission 11 du réservoir 10 est donc ainsi reliée à un réservoir de gaz chaud 50 via une vanne de chauffage 3.

Le refoulement 12 du réservoir 10 est alors également relié à une ligne de fuite via une vanne de fuite 4, par laquelle le gaz chaud est rejeté après son passage par le réservoir 10.

Le gaz chaud contenu dans le réservoir de gaz chaud 50 est par exemple de l'Hélium. Ce dernier peut alors être rejeté dans le ciel gazeux du réservoir d'ergol liquide 30, comme représenté sur la figure 1.

Le système d'injection de gaz chaud est par exemple utilisé suite à une mise en fonctionnement de l'allumeur 40, afin de recharger les sphères de stockage 20 en vue d'un allumage ultérieur.

La figure 2 représente schématiquement le procédé pouvant être mis en œuvre au moyen du système présenté sur la figure 1.

Lors d'une première étape E1, on stocke de la chaleur dans un ensemble de sphères de stockage 20 contenues dans un réservoir 10, via la circulation d'un fluide caloporteur au sein du système.

Puis, une fois l'énergie calorifique souhaitée stockée dans les sphères de stockage, on peut lors d'une seconde étape E2 alimenter un allumeur 40 en ergol via ledit réservoir 10, l'ergol étant prélevé dans un réservoir d'ergol liquide 30, de manière à ce que l'ergol parvenant à l'allumeur 40 traverse au préalable le réservoir 10, et soit vaporisé par échange thermique avec les sphères de stockage 20.

Suite à cette seconde étape E2, on peut lors d'une troisième étape E3 recharger les sphères de stockage, en injectant un gaz chaud tel que de l'Hélium dans le réservoir.

Le système proposé présente donc un fonctionnement cyclique, basé sur une succession d'étapes de vaporisation d'ergol jusqu'à décharge du dispositif et d'étapes de recharge du dispositif.

Un tel fonctionnement cyclique est avantageux par rapport à un fonctionnement continu en ce qu'il permet ainsi d'utiliser un fluide caloporteur qui peut traverser le système pour le recharger, contrairement aux systèmes fonctionnant en continu qui nécessitent un système de recharge spécifique par exemple via un chauffage par induction.

L'utilisation de sphères de stockage 20 est particulièrement avantageuse, notamment du fait de la surface d'échange très importante qu'elles créent.

De plus, l'utilisation de sphères de stockage 20 confère une flexibilité importante dans le calibrage du système, en influant notamment sur le nombre de sphères de stockage 20 et leurs dimensions, ce qui permet notamment de modifier la capacité de stockage et de restitution d'énergie des sphères de stockage 20, ainsi que sur les propriétés de l'écoulement et les pertes de charge générées par les sphères de stockage 20.

Par ailleurs, un tel système 100 présente une masse réduite par rapport aux systèmes passifs ou actifs conventionnels.

En outre, l'échangeur thermique formé par les sphères de stockage 20 permet également de réaliser une homogénéisation du flux traversant le réservoir 10.

Le système et le procédé proposés permettent donc d'exploiter un échangeur à billes pour la vaporisation et l'homogénéisation d'un fluide cryogénique notamment dans le cadre d'applications spatiales.

## Revendications

1. Système (100) d'alimentation en ergol d'un allumeur, comprenant
- un réservoir (10) présentant une admission (11) et un refoulement (12),
- une ligne d'alimentation en ergol liquide reliée à l'admission (11) du réservoir (10),
- une ligne de refoulement d'ergol reliant un refoulement (12) du réservoir (10) à un allumeur (40),
ledit réservoir (10) présentant un volume interne rempli de sphères de stockage (20) de chaleur, lesdites sphères de stockage (20) étant adaptées pour successivement stocker de la chaleur apportée par un fluide caloporteur, et la transmettre à un fluide traversant ledit réservoir (10), de manière à vaporiser un ergol liquide traversant ledit réservoir (10).

2. Système (100) selon la revendication 1, dans lequel le volume interne est défini par des parois périphériques du réservoir (10), une plaque amont (21) et une plaque aval (22), l'une des plaques amont (21) et aval (22) étant soumise à un effort de poussée vers l'autre des plaques amont (21) et aval (22) de manière à compacter les sphères de stockage (20) contenues dans le volume interne, lesdites plaques (21, 22) étant percées, et présentant ainsi chacune des trous ayant chacun un diamètre inférieur à celui des sphères de stockage (20).

3. Système (100) selon l'une des revendications 1 ou 2, dans lequel lesdites sphères de stockage (20) sont réalisées en polyamides et/ou en Polytétrafluoroéthylène.

4. Système (100) selon l'une des revendications 1 à 3, comprenant en outre un système d'injection d'un gaz chaud (50, 3) le gaz chaud présentant le fluide caloporteur, dans le réservoir (10), de manière à emmagasiner de l'énergie calorifique dans les sphères de stockage (20).

5. Système (100) selon la revendication 4, dans lequel ledit gaz chaud est de l'Helium.

6. Procédé de vaporisation d'un ergol liquide alimentant un allumeur (40) au moyen d'un système (100) selon l'une des revendications 1 à 5, dans lequel successivement
- (E1) on stocke de la chaleur apportée par un fluide caloporteur dans les sphères de stockage (20) contenues dans le réservoir (10), puis
- (E2) on alimente l'allumeur (40) en ergol via ledit réservoir (10), de manière à ce que l'ergol parvenant à l'allumeur (40) traverse au préalable le réservoir (10), et soit vaporisé par échange thermique avec les sphères de stockage (20).

7. Procédé selon la revendication 6, dans lequel lesdites sphères de stockage (20) sont maintenues compressées dans le volume interne du réservoir (10), entre deux plaques (21, 22) disposées dans le réservoir (10) et soumises à un effort de poussée.

8. Procédé selon l'une des revendications 6 ou 7, dans lequel (E3) on emmagasine de la chaleur dans les sphères de stockage (20) par injection d'un gaz chaud présentant le fluide caloporteur dans le réservoir (10).

9. Procédé selon la revendication 8, dans lequel ledit gaz chaud est de l'Helium.

## Patentansprüche

1. System (100) zur Versorgung eines Zünders mit Treibstoff, umfassend
- ein Reservoir (10), das einen Einlass (11) und einen Auslass (12) aufweist,
- eine Versorgungsleitung für flüssigen Treibstoff, die mit dem Einlass (11) des Reservoirs (10) verbunden ist,
- eine Treibstoffauslassleitung, die einen Auslass (12) des Reservoirs (10) mit einem Zünder (40) verbindet,
wobei das Reservoir (10) ein Innenvolumen aufweist, das mit Wärmespeicherkugeln (20) gefüllt ist, wobei die Speicherkugeln (20) dazu geeignet sind, sukzessiv Wärme zu speichern, die von einem Wärmetauschfluid herangeführt wird, und diese auf ein Fluid zu übertragen, welches das Reservoir (10) passiert, auf eine Weise, um einen flüssigen Treibstoff, der das Reservoir (10) passiert, zu verdampfen.

2. System (100) nach Anspruch 1, wobei das Innenvolumen durch umlaufende Wände des Reservoirs (10), eine stromaufwärtige Platte (21) und eine stromabwärtige Platte (22) definiert wird, wobei eine der stromaufwärtigen (21) und stromabwärtigen (22) Platten auf solche Weise einer Schubkraft zur jeweils anderen der stromaufwärtigen (21) und stromabwärtigen (22) Platten hin unterworfen ist, dass die Speicherkugeln (20), die in dem Innenvolumen enthalten sind, verdichtet werden, wobei die Platten (21, 22) perforiert sind, und somit jeweils Löcher aufweisen, die jeweils einen Durchmesser aufweisen, der geringer ist als jener der Speicherkugeln (20).

3. System (100) nach einem der Ansprüche 1 oder 2, wobei die Speicherkugeln (20) aus Polyamid und/oder aus Polytetrafluorethylen bestehen.

4. System (100) nach einem der Ansprüche 1 bis 3, ferner umfassend ein Einspritzsystem für heißes Gas (50, 3), wobei das heiße Gas das Wärmetauschfluid darstellt, in das Reservoir (10) auf solche Weise, um Wärmeenergie in den Speicherkugeln (20) einzulagern.

5. System (100) nach Anspruch 4, wobei das heiße Gas Helium ist.

6. Verfahren zur Verdampfung eines flüssigen Treibstoffs, der einen Zünder (40) versorgt, mittels eines Systems (100) nach einem der Ansprüche 1 bis 5, wobei sukzessiv
- (E1) Wärme, die von einem Wärmetauschfluid herangeführt wird, in den Speicherkugeln (20), die in dem Reservoir (10) enthalten sind, gespeichert wird, anschließend
- (E2) der Zünder (40) mit Treibstoff über das Reservoir (10) versorgt wird, auf solche Weise, dass der Treibstoff, der den Zünder (40) erreicht, zuerst das Reservoir (10) passiert und durch Wärmeaustausch mit den Speicherkugeln (20) verdampft wird.

7. Verfahren nach Anspruch 6, wobei die Speicherkugeln (20) in dem Innenvolumen des Reservoirs (10) zwischen zwei Platten (21, 22), die in dem Reservoir (10) angeordnet sind und einer Schubkraft unterliegen, komprimiert werden.

8. Verfahren nach einem der Ansprüche 6 oder 7, wobei (E3) durch Einspritzen eines heißen Gases, welches das Wärmetauschfluid darstellt, in das Reservoir (10) Wärme in den Speicherkugeln (20) eingelagert wird.

9. Verfahren nach Anspruch 8, wobei das heiße Gas Helium ist.

## Claims

1. A system (100) for feeding propellant to an igniter, the system comprising:
- a tank (10) presenting an admission (11) and an outlet (12);
- a liquid propellant feed line connected to the admission (11) of the tank (10); and
- a propellant outlet line connecting an outlet (12) of the tank (10) to an igniter (40);
said tank (10) comprising an inside volume filled with heat storage spheres (20), said storage spheres (20) being adapted successively to store heat delivered by a heat-conveying fluid, and to transmit it to a fluid passing through said tank (10), in such a manner as to vaporize a liquid propellant passing through said tank (10) .

2. A system (100) according to claim 1, wherein the inside volume is defined by peripheral walls of the tank (10), by an upstream plate (21), and by a downstream plate (22), one of the upstream and downstream plates (21, 22) being subjected to a thrust force towards the other one of the upstream and downstream plates (21, 22) so as to compact the storage spheres (20) contained in the inside volume, said plates (21, 22) being pierced, each thus presenting holes each of a diameter smaller than the diameter of the storage spheres (20).

3. A system (100) according to claim 1 or claim 2, wherein said storage spheres (20) are made of polyamides and/or of polytetrafluoroethylene.

4. A system (100) according to any one of claims 1 to 3, further comprising a system (50, 3) for injecting a hot gas, said hot gas comprising the heat-conveying fluid, into the tank (10) so as to store heat energy in the storage spheres (20).

5. A system (100) according to claim 4, wherein said hot gas is helium.

6. A method of vaporizing a liquid propellant feeding an igniter (40) by means of a system (100) according to any one of claims 1 to 5, the method comprising in succession:
- storing (E1) heat brought by a heat-conveying fluid in the storage spheres (20) contained in the tank (10); and then
- feeding (E2) the igniter (40) with propellant via said tank (10) so that the propellant reaching the igniter (40) previously passes through the tank (10) and is vaporized by exchanging heat with the storage spheres (20) .

7. A method according to claim 6, wherein said storage spheres (20) are kept compressed in the inside volume of the tank (10) between two plates (21, 22) arranged in the tank (10) and subjected to a thrust force.

8. A method according to claim 6 or claim 7, wherein heat is stored (E3) in the storage spheres (20) by injecting a hot gas comprising the heat-conveying fluid into the tank (10) .

9. A method according to claim 8, wherein said hot gas is helium.
